# EUROPÄISCHE PATENTSCHRIFT

(11) **EP 3 048 080 B1**
(45) Veröffentlichungstag und Bekanntmachung des Hinweises auf die Patenterteilung: **15.08.2018**
(21) Anmeldenummer: 16151692.7
(22) Anmeldetag: 18.01.2016
(51) Int. Cl.: B66F 9/075, B60K 1/04

(54) **FLURFÖRDERZEUG MIT EINEM AUSWECHSELBAREN BATTERIEBLOCK**
INDUSTRIAL TRUCK WITH A REPLACEABLE BATTERY BLOCK
CHARIOT DE MANUTENTION AYANT UN BLOC BATTERIE POUVANT ÊTRE REMPLACÉ

(30) Priorität: 26.01.2015 DE 102015101051
(43) Veröffentlichungstag der Anmeldung: 27.07.2016
(73) Patentinhaber: Jungheinrich Aktiengesellschaft, 22047 Hamburg (DE)
(72) Erfinder: Schüler, Michael, 23923 Schönberg (DE)
(74) Vertreter: Hauck Patentanwaltspartnerschaft mbB

(56) Entgegenhaltungen:
- DE-A1-102004 047 342
- DE-A1-102008 024 854

## Beschreibung

Die vorliegende Erfindung betrifft ein Flurförderzeug mit einem auswechselbaren Batterieblock. Das Flurförderzeug besitzt einen auswechselbaren Batterieblock und ein den Batterieblock aufnehmendes Batteriefach, wobei das Batteriefach wenigstens eine seitliche Zugriffsöffnung zum Einschieben und Herausziehen des Batterieblocks umfasst. Auf dem Boden des Batteriefachs sind in Batteriebewegungsrichtung Rollen vorgesehen.

Bei dem erfindungsgemäßen Flurförderzeug kann der Batterieblock ein eine oder mehrere Batterie aufnehmendes Gefäß, wie beispielsweise ein Batterietrog, sein. Der Batterieblock selbst kann auch aus der oder den Batterien bestehen, ohne dass diese in einem Gefäß oder Behälter zusammengefasst sind.

Aus DE 10 2008 024 854 A1 ist ein Flurförderzeug mit einem den Batterieblock aufnehmenden Batteriefach bekannt geworden, das in Batteriebewegungsrichtung wenigstens eine Führungsbahn aufweist, auf welcher der Batterieblock mit einem darin vorgesehenen Abstützelement relativ zum Batteriefach beweglich abstützbar ist. Der Batteriefachboden besitzt mehrere Rollenaufnahmeöffnungen, in die bedarfsweise dem Batteriefachboden zuzuordnende Rollen einsetzbar sind. Die Aufnahme für die Rollen im Batteriefachboden besitzt einen über eine Öffnungskontur vorstehenden Stützrandbereich, mit dem die Rolle auf dem Batteriefachboden aufliegt.

Aus DE 10 2007 031 149 A1 ist ein Flurförderzeug mit einem auswechselbaren Batterieblock und einem den Batterieblock aufnehmenden Batteriefach bekannt geworden, wobei das Batteriefach eine seitliche Zugriffsöffnung zum Einschieben und Herausziehen des Batterieblocks aufweist. In dem Batteriefach ist ein ein- und wieder ausschiebbarer Schubrahmen vorgesehen, der an seinem in dem Batteriefach angeordneten Ende eine Rolleinrichtung aufweist.

Die Schrift DE102004047342 A1 offenbart ein Flurförderzeug nach dem Oberbegriff des Anspruchs 1.

Der Erfindung liegt die Aufgabe zugrunde, ein Flurförderzeug bereitzustellen, dessen Batteriefach in einfacher und zuverlässiger Weise ausgebildet ist, um Rollenmodule zum Ein- und wieder Ausschieben einer Batterie aufzunehmen.
Erfindungsgemäß wird die Aufgabe durch ein Flurförderzeug mit den Merkmalen aus Anspruch 1 gelöst. Vorteilhafte Ausgestaltungen bilden den Gegenstand der Unteransprüche.
Das erfindungsgemäße Flurförderzeug besitzt einen auswechselbaren Batterieblock und ein den Batterieblock aufnehmendes Batteriefach. Das Batteriefach ist mit Rollenaufnahmen versehen, die jeweils ein Rollenmodul lagern können. Über die in den Rollenaufnahmen gelagerten Rollenmodule wird beim Einschieben und wieder Herausziehen des Batterieblocks der erforderliche Kraftaufwand reduziert, da der Batterieblock über die Rollen abrollen kann. Erfindungsgemäß besitzen die Rollenaufnahmen einen zentralen Ausschnitt und zwei einander gegenüberliegende Lagerabschnitte. Jeder der Lagerabschnitte weist eine wannenförmige Halbschale auf. Der Grund der Halbschale grenzt hierbei an den Ausschnitt zwischen den Lagerabschnitten an. Der Grund der wannenförmigen Halbschale dient als Lagerabschnitt für ein einzusetzendes Rollenmodul, das in dem Ausschnitt frei laufen kann. Im Gegensatz zu Rollenaufnahmen, wie sie aus dem Stand der Technik bekannt sind, wird hierbei nicht auf extra eingesetzte oder geformte Stützeinrichtungen für das Rollenmodul abgestellt, sondern ein in dem Lagerabschnitt geformtes Lager ist in dem Batteriefachboden ausgebildet.
Erfindungsgemäß sind quer zu einer Verbindungslinie der Lagerabschnitte angeordnete Queranschläge vorgesehen, die in den zentralen Ausschnitt vorstehen. Die Queranschläge sind bevorzugt mittig zwischen den Lagerabschnitten angeordnet und plan mit dem Boden in dem Batteriefach ausgebildet. Die vorstehenden Queranschläge stehen in den Ausschnitt zwischen den Lagerabschnitten vor und bilden eine seitliche Begrenzung für das Rollenmodul, wenn es sich seitlich in seinem Lagerabschnitt bewegt. Das seitlich, also in Ein- oder Ausschubrichtung der Batterie verschobene Rollenmodul stößt an die vorstehenden Queranschläge an und begrenzt die Bewegung des Rollenmoduls. Die Queranschläge bilden eine Verliersicherung für das eingesetzte Rollenmodul in Querrichtung.

In einer bevorzugten Ausgestaltung ist der Lagerabschnitt einstückig in dem Boden des Batteriefachs geformt. Der Lagerabschnitt entsteht also durch einen Umformungsvorgang des Bodens. Der Boden besteht bevorzugt aus Metall. Es wird also darauf verzichtet, in dem Boden Lagerabschnitte oder Stützabschnitte anzusetzen oder auszuschneiden.

In einer bevorzugten Ausgestaltung ist ein Übergangsbereich vorgesehen, der sich aus der Ebene des Bodens kommend in einem Neigungswinkel zum Grund erstreckt. Durch den Übergangsbereich entsteht ein kontinuierlicher fließender Übergang, der sich unter einem Neigungswinkel in den Grund der Rollenaufnahme erstreckt. Ein unter einem Neigungswinkel verlaufender Übergangsbereich ist auch bei geringer Materialstärke geeignet, große Kräfte aufzunehmen.

In einer bevorzugten Ausgestaltung weist das Rollenmodul eine auf einem Zapfen drehbar gelagerte Rollenhülse auf, wobei zwei Zapfenenden seitlich vorstehen. Bevorzugt ist der Grund des Lagerabschnitts derart ausgebildet, dass für ein Rollenmodul beide Zapfenenden auf diesem auflagern können. Hierzu sind Länge, Breite und Tiefe des Lagerabschnitts dimensioniert, dass an einander gegenüberliegenden Lagerabschnitten die Zapfenenden eines Rollenmoduls aufliegen können, ohne dass Spiel in axialer Richtung des Rollenmoduls besteht.

In einer bevorzugten Ausgestaltung weist der Grund jedes Lagerabschnitts einen Vorsprung auf, der sich entlang einer Verbindungslinie zwischen den Lagerabschnitten in den zentralen Ausschnitt erstreckt. Der Vorsprung vergrößert die Auflagefläche für die Zapfenenden des Rollenmoduls und leitet damit die Kraft über eine größere Auflagefläche in den Batteriefachboden ein.

In einer bevorzugten Ausgestaltung ist das Rollenmodul in seinem in die Rollenaufnahme eingesetzten Zustand mit seinem überwiegenden Teil zwischen dem Grund der Rollenaufnahme und dem Boden des Batteriefachs angeordnet. Zum Abrollen steht somit nur ein kleiner Abschnitt der Rollenhülse zur Verfügung. Wenn Queranschläge in den Ausschnitt vorstehen, so befindet sich die Rollenhülse überwiegend unterhalb der Queranschläge und nur ein geringer Abschnitt der Rollenhülse steht zwischen den Queranschlägen aus dem Batterieboden vor.

In dem eingesetzten Zustand des Rollenmoduls befinden sich die Zapfenenden vollständig zwischen dem Grund der Rollenaufnahme und dem Boden des Batteriefachs. Eine in dem erfindungsgemäßen Fahrzeug eingesetzte Batterie rollt also auf den gelagerten Hülsen und nicht den Zapfen ab.

Die Erfindung wird nachfolgend an einem Ausführungsbeispiel näher beschrieben. Es zeigen:
- Fig. 1: ein Flurförderzeug mit einem seitlichen Batteriefach bei geschlossenem Batteriedeckel,
- Fig. 2: das Flurförderzeug aus Fig. 1 bei geöffnetem Batteriedeckel und seitlich teilweise herausgezogener Batterie,
- Fig. 3: eine seitliche Ansicht der Batterie auf dem Batteriefachboden,
- Fig. 4: eine Draufsicht auf einen Batteriefachboden mit eingesetztem Rollenmodul,
- Fig. 5: eine Schnittansicht entlang der Linie A-A aus Fig. 4,
- Fign. 6A, 6B: eine Schnittansicht entlang der Linie B-B aus Fig. 4 mit und ohne verschobenem Rollenkörper,
- Fig. 7: eine perspektivische Ansicht eines Batteriefachbodens von der Seite mit einem Blick auf die Rollenaufnahmen, und
- Fig. 8: eine perspektivische Ansicht auf den Batteriefachboden mit seinen Rollenaufnahmen von der Unterseite.

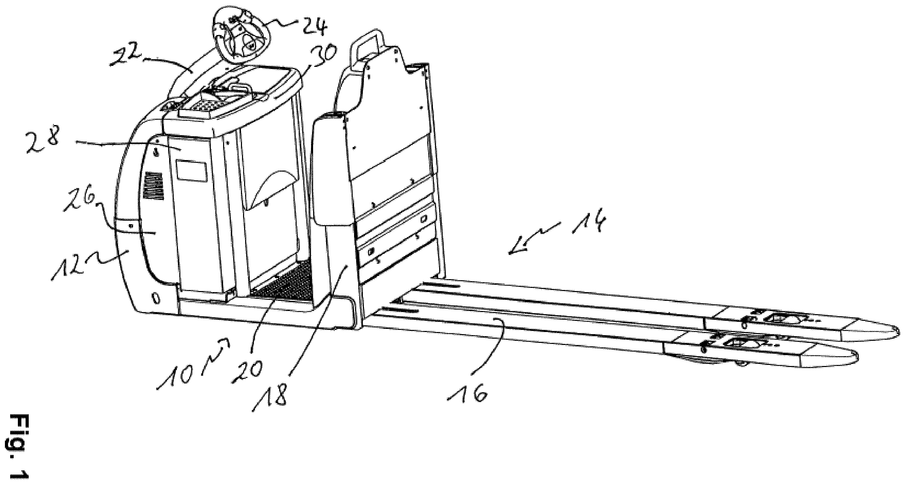

Fig. 1 zeigt ein Flurförderzeug 10 in einer perspektivischen Ansicht von der Seite. Das Flurförderzeug besitzt ein Antriebsteil 12 und ein Lastteil 14. Das Lastteil 14 besitzt höhenverstellbare Lastgabeln 16, die über eine Hubeinrichtung (nicht dargestellt) über einen Lastrahmen 18 anhebbar sind. Das Antriebsteil 12 besitzt eine Fahrerstandplattform 20, auf der stehend eine Bedienperson über ein Bedienelement 24 das Fahrzeug steuern kann. Das Bedienelement 24 ist über eine Kurzdeichsel 22 an einem Fahrzeuggehäuse 26 angeordnet. Eine Batterie 28 befindet sich unter einem Batteriedeckel 30.

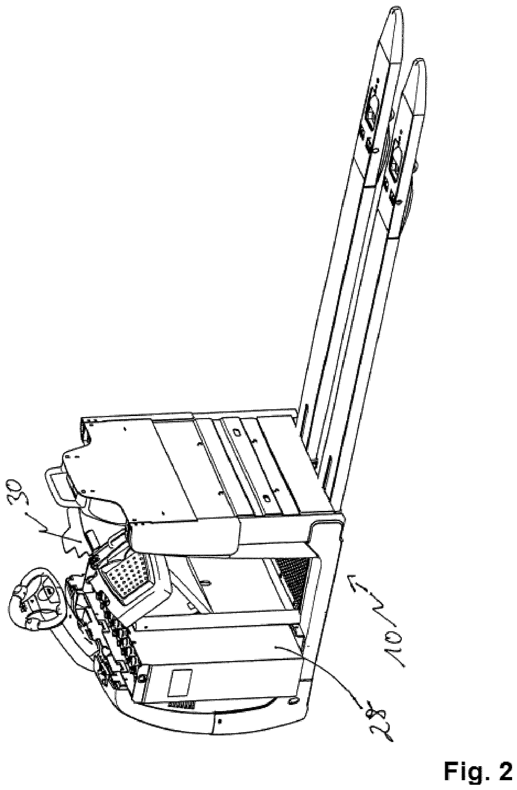

Fig. 2 zeigt das Flurförderzeug 10 in derselben Perspektive wie in Fig. 1, wobei der Batteriedeckel 30 hier teilweise geöffnet ist. Die Batterie 28 ist teilweise aus dem Batteriefach herausgezogen worden.

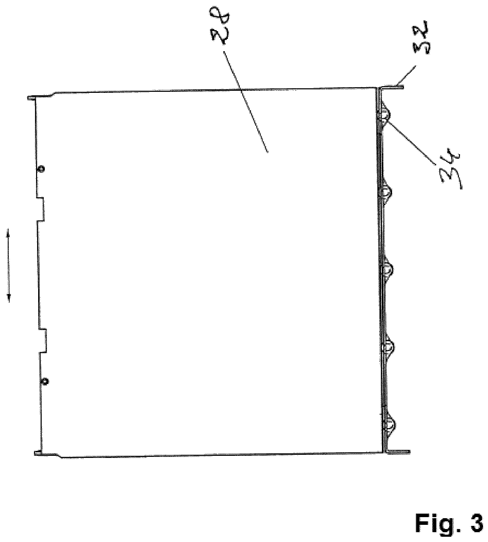

Fig. 3 zeigt in einer schematischen Ansicht von der Seite eine Batterie 28, die auf einem Batteriefachboden 32 steht, in dem Rollenmodule 34 gelagert sind.

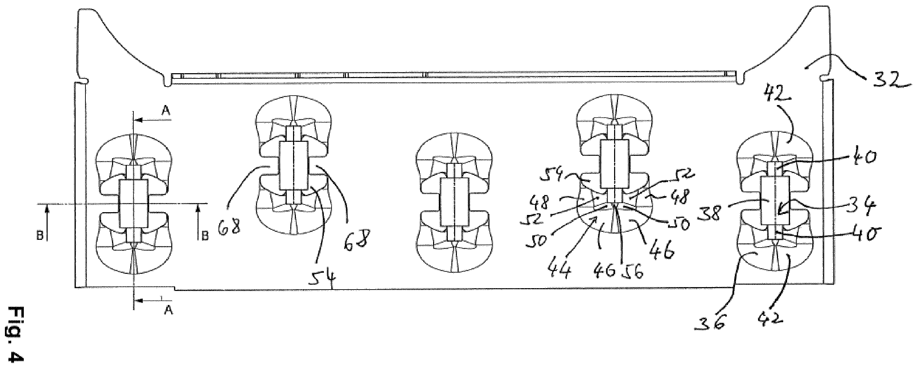

Fig. 4 zeigt eine Draufsicht auf den Batteriefachboden 32. Der Batteriefachboden 32 besitzt fünf Rollenaufnahmen 36 mit jeweils einem eingesetzten Rollenmodul 34. Ein Lagerabschnitt 44 besitzt Übergangsabschnitte 46 bis 52. Alle Übergangsabschnitte 46 bis 52 sind in den Lagerabschnitten 44 spiegelsymmetrisch zu einer Längsachse des Rollenmoduls angeordnet.

Der Übergangsabschnitt 46 und sein spiegelbildlicher Gegenpart liegen an dem am weitesten von dem Ausschnitt 54 des Lagerabschnitts 44 entfernt liegenden Teil. An den Ausschnitt 54 angrenzend sind die Übergangsabschnitte 48 und 52 vorgesehen, wobei der Übergangsabschnitt 52 zentral und der Übergangsabschnitt 48 außenliegend angeordnet sind. Ein weiterer Übergangsabschnitt 50 ist zwischen dem endseitigen Übergangsabschnitt 48 und dem inneren, zentralen Übergangsabschnitt 52 angeordnet. Zwischen den Übergangsabschnitten 50 und seinem spiegelbildlichen Übergangsabschnitt ist ein Nasenabschnitt 56 geformt, der eine Bewegung des Zapfenendes in axialer Richtung begrenzt.

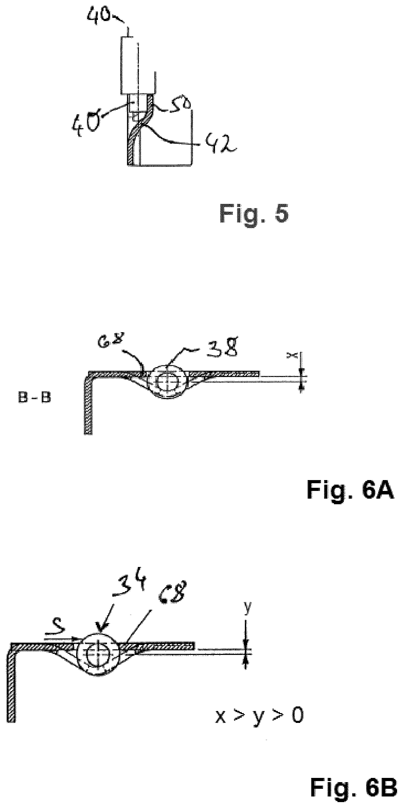

Wie in der Schnittdarstellung aus Fig. 5 zu erkennen, formen die Übergangsabschnitte einen weichen Übergang, der in einen Grund 58 des Lagerabschnitts übergeht. Der Grund 58 des Lagerabschnitts lagert jeweils ein Zapfenende 40. Die Übergangsabschnitte 46 bis 52, zusammen mit dem Grund 58 des Lagerabschnitts, bilden eine wannenförmige Halbschale, wobei beide Lagerabschnitte zusammen ohne Ausschnitt dazwischen eine wannenförmige Schale bilden.

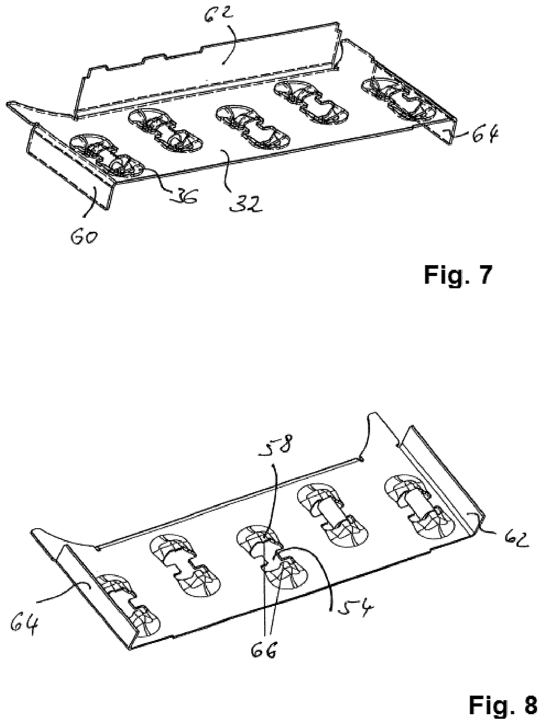

Fig. 7 zeigt einen Batteriefachboden 32, der eine im Wesentlichen rechteckige Form aufweist, wobei drei der vier Ränder mit umgebogenen Abschnitten 60, 62 und 64 versehen sind. Über die Abschnitte 60 bis 64 ist der Einbau des Batteriefachbodens in das Batteriefach und an den Fahrzeugrahmen erleichtert.

Die Rollenaufnahmen 36 sind in Längsrichtung des Batteriefachbodens 32 hintereinander angeordnet, wobei in seinem eingebauten Zustand diese in Querrichtung zu einer Fahrzeuglängsrichtung sich erstrecken. Die Rollenaufnahmen 36 sind alternierend versetzt zueinander angeordnet, so dass eine eingeschobene Batterie abwechselnd mehr auf einer und mehr auf der anderen Seite abgestützt wird.

Fig. 8 zeigt den Batteriefachboden von einer anderen Seite, in der der abgewinkelte Abschnitt 62 verdeckt ist. In Fig. 8 sind die beiden Vorsprünge 66 zu erkennen, die in den Ausschnitt 54 vorstehen. Die Vorsprünge 66 liegen in einer Höhe mit dem Grund 58 (vgl. Fig. 5) des Lagerabschnitts und vergrößern die Lagerfläche.

Die Queranschläge 68 bieten einen besonderen Vorzug für die Verliersicherheit bei der Rollenaufnahme. Wie beispielsweise in Fig. 4 zu erkennen, stehen die Queranschläge 68 in den Ausschnitt 54 vor. Die Queranschläge 68 verlaufen plan mit dem Batteriefachboden.

Der in Fig. 6A dargestellte Querschnitt entlang der Linie B-B zeigt, dass das eingesetzte Rollenmodul mit seiner Hülse 38 im Wesentlichen unterhalb der Queranschläge 68 angeordnet ist. Die Rollenhülse 38 läuft frei von den Queranschlägen 68. Wird beispielsweise beim Ein- oder Ausschieben einer Batterie eine Querkraft auf das Rollenmodul ausgeübt, so verschiebt sich dieses quer im Lagerabschnitt. Hierdurch wird das Rollenmodul entlang dem Übergangsabschnitt angehoben und gerät in Anschlag mit einem der Queranschläge 68.Wie in Fig. 6B dargestellt, wird das in Richtung des Pfeils S verschobene Rollenmodul 34 um die Höhe x minus y angehoben, indem das Zapfenende 40 insbesondere auf dem Übergangsabschnitt 52 rollt und so die Hülse gegen den Queranschlag 68 gedrückt wird. Hier hört die Drehbewegung der Hülse 38 auf und eine ein- oder ausgeschobene Batterie wird schleifend über diese geschoben.

In einer bevorzugten Ausgestaltung ist der Batteriefachboden aus einem Blech hergestellt, wobei aufgrund der Ausbildung der Rollenaufnahme mit einer Blechstärke von weniger als 8 mm, bevorzugt weniger als 6 mm, insbesondere mit 4 mm bis 6 mm, gearbeitet werden kann. Trotz einer solchen geringen Blechstärke ist es möglich, über die Rollenmodule Batterien mit 300 kg bis 500 kg Eigengewicht dauerhaft und stabil zu lagern. Zu berücksichtigen ist dabei, dass an einem Flurförderzeug Stoßbelastungen auftreten können, die fünfmal größer als die statische Belastung sind.

An dem erfindungsgemäßen Batteriefachboden ist ein Rollenlager in Form zweier wannenförmiger Halbschalen vorgesehen, die durch einen Ausschnitt für die Batterierollenhülse voneinander getrennt sind. Der Ausschnitt dient der Freigängigkeit der Rollenhülse. Die besondere geometrische Ausgestaltung der Lagerabschnitte bietet bei ähnlicher Festigkeit und einfacher Montage sowie Positionierung der Batterierollen ausreichend Sicherheit gegen ein Verlieren der

Rollen. Die wannenförmigen Halbschalen dienen als Lager für die Zapfenenden, dabei ist im Wesentlichen das Verrutschen der Zapfenenden in Fahrzeug- und in Fahrzeugquerrichtung (Verlierschutz) gegeben. Zusätzliche Queranschläge für die Hülse, die höher als der Drehpunkt der Hülse liegen, verhindern ein Herausschieben des gesamten Rollenmoduls aus der Lagerschale. Hergestellt wird die Rollenaufnahme durch Blechumformung, beispielsweise durch Pressen, Prägen oder Tiefziehen. Der Umformungsgrad für die wannenförmige Lageraufnahme erfordert sanfte Übergänge, um ein Reißen des Materials während der Herstellung zu verhindern und zugleich eine ausreichende Festigkeit bereitzustellen.

### Bezugszeichenliste

- 10: Flurförderzeug
- 12: Antriebsteil
- 14: Lastteil
- 16: Lastgabel
- 18: Lastrahmen
- 20: Fahrerstandplattform
- 22: Kurzdeichsel
- 24: Bedienelement
- 26: Fahrzeuggehäuse
- 28: Batterie
- 30: Batteriedeckel
- 32: Batteriefachboden
- 34: Rollenmodul
- 36: Rollenaufnahme
- 38: Hülse
- 40: Zapfenende
- 44: Lagerabschnitt
- 46: Übergangsabschnitt
- 48: Übergangsabschnitt
- 50: Übergangsabschnitt
- 52: Übergangsabschnitt
- 54: Ausschnitt des Lagerabschnitts
- 56: Nasenabschnitt
- 58: Grund des Lagerabschnitts
- 60: umgebogener Abschnitt des Batteriefachbodens
- 62: umgebogener Abschnitt des Batteriefachbodens
- 64: umgebogener Abschnitt des Batteriefachbodens
- 66: Vorsprung
- 68: Queranschlag

## Patentansprüche

1. Flurförderzeug (10) mit einem auswechselbaren Batterieblock (28) und einem den Batterieblock aufnehmenden Batteriefach, wobei das Batteriefach einen Boden (32) mit Rollenaufnahmen (36) aufweist, die jeweils ein Rollenmodul (34) lagern können, wobei die Rollenaufnahmen (36) jeweils einen zentralen Ausschnitt und zwei einander gegenüberliegende Lagerabschnitte (44) für das Rollenmodul (34) besitzen, wobei jeder der Lagerabschnitte (44) eine wannenförmige Halbschale aufweist, deren Grund (58) an den zentralen Ausschnitt zwischen den Lagerabschnitten grenzt,
**dadurch gekennzeichnet, dass**
quer zu einer Verbindungslinie der Lagerabschnitte Queranschläge (68) in den zentralen Ausschnitt vorstehen, wobei die Queranschläge (68) plan mit dem Boden (32) in dem Batteriefach verlaufen und ein in Ein- und Ausschubrichtung der Batterie (28) verschobenes Rollenmodul (34) an die Queranschläge (68) anschlägt, die eine Bewegung des Rollenmoduls (34) begrenzen.

2. Flurförderzeug nach Anspruch 1, **dadurch gekennzeichnet, dass** der Lagerabschnitt (44) einstückig in dem Boden (32) geformt ist.

3. Flurförderzeug nach Anspruch 1 oder 2, **dadurch gekennzeichnet, dass** der Lagerabschnitt (44) einen Übergangsbereich (46, 52) aufweist, der sich aus der Ebene des Bodens (32) kommend in einem Neigungswinkel zum Grund (58) hin erstreckt.

4. Flurförderzeug nach einem der Ansprüche 1 bis 3, **dadurch gekennzeichnet, dass** das Rollenmodul (34) eine auf einem Zapfen drehbar gelagerte Rollenhülse (38) aufweist, wobei zwei Zapfenenden (40) seitlich aus dieser vorstehen.

5. Flurförderzeug nach Anspruch 1 bis 4, **dadurch gekennzeichnet, dass** der Grund (58) des Lagerabschnitts ausgebildet ist, um ein Zapfenende (40) zu lagern.

6. Flurförderzeug nach Anspruch 5, **dadurch gekennzeichnet, dass** der Grund (58) jedes Lagerabschnitts einen Vorsprung (66) aufweist, der sich entlang einer Verbindungslinie zwischen den Lagerabschnitten in den zentralen Ausschnitt erstreckt.

7. Flurförderzeug nach einem der Ansprüche 1 bis 6, **dadurch gekennzeichnet, dass** im eingesetzten Zustand des Rollenmoduls (34) die Rollenhülse (38) überwiegend zwischen dem Grund (58) der Rollenaufnahme und dem Grund des Bodens (32) verläuft.

8. Flurförderzeug nach Anspruch 7, **dadurch gekennzeichnet, dass** im eingesetzten Zustand die Zapfenenden (40) vollständig zwischen dem Grund der Rollenaufnahme und dem Grund des Bodens (32) angeordnet sind.

## Claims

1. An industrial truck (10) with an exchangeable battery block (28) and a battery compartment housing the battery block, wherein the battery compartment comprises a bottom (32) with roller housings (36), each of which can bearing mount a roller module (34), wherein each of the roller housings (36) has a central cut-out and two opposing bearing sections (44) for the roller module (34), each of the bearing sections (44) comprising a trough shaped half shell, whose base (58) is adjacent to the central cut-out between the bearing sections,
**characterised in that**
crosswise to a conjunction line of the bearing sections, cross stops (68) project into the central cut-out, wherein the cross stops (68) run flatly with the bottom (32) in the battery compartment and a roller module (34) displaced in the direction of insertion and extension of the battery (28) abuts on the cross stops (68) which limit a movement of the roller module (34).

2. The industrial truck according to claim 1, **characterised in that** the bearing section (44) is formed in one piece with the bottom (32).

3. An industrial truck according to claim 1 or 2, **characterised in that** the bearing section (44) comprises a transition area (46, 52), which extends in an inclination angle towards the base (58), starting from the level of the bottom (32).

4. An industrial truck according to any one of the claims 1 to 3, **characterised in that** the roller module (34) comprises a roller sleeve (38), rotatably mounted on a pin, two pin ends (40) laterally projecting out of it.

5. An industrial truck according to claims 1 to 4, **characterised in that** the base (58) of the bearing section is designed for bearing mount a pin end (40).

6. The industrial truck according to claim 5, **characterised in that** he base (58) of each bearing section has a projection (66), which extends along a junction line between the bearing sections into the central cut-out.

7. An industrial truck according to claims 1 to 6, **characterised in that** in the inserted condition of the roller module (34), the roller sleeve (34) runs predominantly between the base (38) of the roller housing and the base of the bottom (32).

8. The industrial truck according to claim 7, **characterised in that** the pin ends (40) are completely arranged between the base of the roller housing and the base of the bottom (32) in the inserted condition.

## Revendications

1. Chariot de manutention (10) avec un bloc de batterie (28) remplaçable et un compartiment de batterie logeant le bloc de batterie, le compartiment de batterie comportant un fond (32) avec des réceptacles de rouleaux (36), dont chacun peut supporter un module à rouleaux (34), chacun des réceptacles de rouleaux (36) ayant une découpe centrale et deux zones de palier (44) opposées pour le module à rouleaux (34), chacune des zones de palier (44) comportant une demi coque en forme de cuvette, dont la base (58) est adjacente à la découpe centrale entre les zones de palier, **caractérisé en ce que**
transversalement à une ligne de connexion des zones de palier, des butées transversales (68) font saillie dans la découpe centrale, les butées transversales (68) s'étendant à plat avec le fond (32) dans le compartiment de batterie et un module à rouleaux (34) repoussé dans la direction d'insertion et d'extraction de la batterie (28) heurte les butées transversales (68) qui limitent un mouvement du module à rouleaux (34).

2. Chariot de manutention selon la revendication 1, **caractérisé en ce que** la zone de palier (44) est formée en une seule pièce avec le fond (32).

3. Chariot de manutention selon la revendication 1 ou 2, **caractérisé en ce que** la zone de palier (44) comporte une région de transition (46, 52), qui s'étend dans un angle d'inclinaison vers la base (58), à partir du niveau du fond (32).

4. Chariot de manutention selon une des revendications 1 à 3, **caractérisé en ce que** le module à rouleaux (34) comporte une douille à rouleau (38), montée en rotation sur un tenon, deux extrémités du tenon (40) faisant latéralement saillie de cela.

5. Chariot de manutention selon la revendication 1 à 4, **caractérisé en ce que** la base (58) de la zone de palier est conçue à supporter une extrémité du tenon (40).

6. Chariot de manutention selon la revendication 5, **caractérisé en ce que** la base (58) de chaque zone de palier a une saillie (66), qui s'étend le long d'une ligne de connexion entre les zones de palier à la découpe centrale.

7. Chariot de manutention selon la revendications 1 à 6, **caractérisé en ce que** dans l'état inséré du module à rouleaux (34), la douille à rouleau (34) se déroule principalement entre la base (38) du réceptacle de rouleaux et la base du fond (32).

8. Chariot de manutention selon la revendication 7, **caractérisé en ce que** dans l'état inséré, les extrémités du tenon (40) sont entièrement arrangées entre la base du réceptacle de rouleaux et la base du fond (32).
